# EUROPÄISCHE PATENTSCHRIFT

(11) **EP 2 370 284 B1**
(45) Veröffentlichungstag und Bekanntmachung des Hinweises auf die Patenterteilung: **17.10.2012**
(21) Anmeldenummer: 09759883.3
(22) Anmeldetag: 18.11.2009
(51) Int. Cl.: B60K 6/365, B60K 6/48, B60Q 1/26, B60K 6/00, B60Q 1/32, B60Q 1/50

(54) **KRAFTFAHRZEUG MIT HYBRIDANTRIEB UND EXTERNER ANZEIGEEINRICHTUNG ZUM ANZEIGEN EINER AUGENBLICKLICHEN BETRIEBSART DES HYBRIDANTRIEBS**
MOTOR VEHICLE HAVING HYBRID DRIVE AND EXTERNAL DISPLAY DEVICE FOR DISPLAYING A CURRENT OPERATING MODE OF THE HYBRID DRIVE
VÉHICULE À MOTEUR POURVU D'UN ENTRAÎNEMENT HYBRIDE ET D'UN DISPOSITIF D'AFFICHAGE EXTÉRIEUR POUR INDIQUER UN MODE DE FONCTIONNEMENT MOMENTANÉ DE L'ENTRAÎNEMENT HYBRIDE

(30) Priorität: 26.11.2008 DE 102008059147
(43) Veröffentlichungstag der Anmeldung: 05.10.2011
(73) Patentinhaber: Audi AG, 85045 Ingolstadt (DE)
(72) Erfinder: MEURLE, Jürgen, 85055 Ingolstadt (DE)
(74) Vertreter: Brandt, Kai
(86) Internationale Anmeldenummer: PCT/EP2009/008186
(87) Internationale Veröffentlichungsnummer: WO 2010/060556

(56) Entgegenhaltungen:
- EP-A1- 1 953 022
- EP-A2- 0 873 910
- WO-A1-2006/001809
- DE-C1- 4 319 605
- DE-U1- 9 109 765
- NL-A- 8 300 073
- US-A- 3 691 525
- US-A- 4 430 692
- US-A- 4 631 516
- US-A1- 2005 128 065

## Beschreibung

Die Erfindung betrifft ein Kraftfahrzeug mit einem Hybridantrieb mit mehr als einer Antriebseinheit gemäß dem Oberbegriff des Anspruchs 1, sowie ein Verfahren zum Betreiben eines Kraftfahrzeugs mit einem Hybridantrieb gemäß dem Oberbegriff des Anspruchs 10.

Das gattungesbildende Dokument EP 1953022 offenbert ein Kreftfahrzeng mit einem Hybridantrieb mit den Merkmalen des Oberbegriffs von Anspruch 1.

Der Betrieb von Kraftfahrzeugen, deren Feinstaubemissionen vorgegebene Grenzwerte überschreiten, unterliegt bereits heute in einigen Städten und Gemeinden Vorschriften, durch die ein Betrieb dieser Kraftfahrzeuge eingeschränkt und nur unter bestimmten Bedingungen zugelassen wird. Um die Einhaltung der Vorschriften überprüfen zu können, müssen die in diesen Städten oder Gemeinden betriebenen Kraftfahrzeuge eine für Überwachungsbehörden oder deren Vollzugsorgane gut sichtbar an der Windschutzscheibe angebrachte sogenannte Feinstaubplakette mit sich führen, aus der sich entnehmen lässt, in welche von vier Schadstoffgruppen das Kraftfahrzeug eingeordnet ist.

Da die Reduzierung von Emissionen nicht nur bei Feinstäuben, sondern auch bei anderen Luftschadstoffen, wie NOx, CO oder unverbrannten Kohlenwasserstoffen, sowie bei klimaschädlichen Stoffen, wie CO₂, aus Verbrennungsmotoren von Kraftfahrzeugen an Grenzen stößt, ist damit zu rechnen, dass es in der Zukunft nicht nur für Feinstäube sondern vermehrt auch für andere Schadstoffe oder klimaschädliche Stoffe Vorschriften geben wird, die den Betrieb von Kraftfahrzeugen mit einer über einen Grenzwert liegenden Emission derartiger Stoffe in abgegrenzten Zonen, zum Beispiel innerhalb von Städten, Gemeinden oder ganzen Regionen, einschränken werden. Ähnliches kann grundsätzlich auch für Geräuschemissionen gelten.

Während bei Kraftfahrzeugen mit einer einzigen Antriebseinheit eine eindeutige Einordnung in eine vorgegebene Schadstoffklasse oder Schadstoffgruppe möglich ist, ist dies bei Kraftfahrzeugen der eingangs genannten Art mit einem Hybridantrieb nicht der Fall, da die beiden Antriebseinheiten dieser Kraftfahrzeuge in der Regel ganz unterschiedliche Schadstoffemissionen aufweisen. Aus diesem Grund ist es bei derartigen Kraftfahrzeugen auch nicht möglich, die Einhaltung von Vorschriften zur Begrenzung des Ausstoßes von Schadstoffen und/oder klimaschädlichen Stoffen durch Anbringung einer von außen sichtbaren Plakette an der Windschutzscheibe zu kontrollieren.

Da die Entwicklung von Kraftfahrzeugen einerseits in die Richtung geht, zunehmend mehr Kraftfahrzeuge mit einem Hybridantrieb auszustatten, und da es andererseits zunehmend mehr Entwicklungsprojekte für Kraftfahrzeuge gibt, in denen verschiedenste Kombinationen von Antriebseinheiten untersucht und erprobt werden, das heißt nicht nur die zur Zeit übliche Kombination eines Verbrennungsmotors mit einem oder zwei Elektromotoren, wird die Feststellung, ob ein Kraftfahrzeug berechtigterweise oder unberechtigterweise in einer Zone mit reglementiertem Ausstoß von Schadstoffen und/oder klimaschädlichen Stoffen betrieben wird, in der Zukunft voraussichtlich noch weiter erschwert.

Ausgehend hiervon liegt der Erfindung die Aufgabe zugrunde, ein Kraftfahrzeug mit einem Hybridantrieb und ein Verfahren zum Betreiben eines Kraftfahrzeugs mit einem Hybridantrieb der eingangs genannten Art dahingehend zu verbessern, dass sich der aktuelle Ausstoß von Schadstoffen und/oder klimaschädlichen Stoffen und/oder die aktuelle Geräuschemission des Kraftfahrzeugs leichter feststellen lässt.

Diese Aufgabe wird erfindungsgemäß durch eine im Fahrbetrieb von außerhalb des Kraftfahrzeugs deutlich sichtbare Anzeigeeinrichtung zum Anzeigen der augenblicklichen Betriebsart des Hybridantriebs gelöst.

Als Hybridantrieb wird im Rahmen dieser Patentanmeldung ein Kraftfahrzeugantrieb mit zwei verschiedenen Antriebseinheiten oder Energieumwandlern, wie zum Beispiel E-lektro-, Otto-, Diesel- oder Gasmotoren, verstanden, die in Abhängigkeit von der jeweiligen Fahrsituation und/oder vom Fahrerwunsch einzeln oder gemeinsam betrieben werden können und die zu diesem Zweck aus zwei verschiedenen, im Kraftfahrzeug mitgeführten Energiespeichern, wie zum Beispiel einer Batterie und einem Kraftstoff- oder Gastank, gespeist werden.

Als emissionsärmere Antriebseinheit wird im Rahmen dieser Patentanmeldung diejenige Antriebseinheit bezeichnet, die allgemein oder unter den augenblicklichen Fahrtbedingungen weniger Schadstoffe oder klimaschädliche Stoffe oder Geräusche bzw. weniger der für die Einhaltung bestimmter Vorschriften relevanten Schadstoffe oder klimaschädlichen Stoffe emittiert. Im Falle eines Hybridantriebs mit einem Verbrennungsmotor und einem Elektromotor ist der letztere sowohl im Hinblick auf Luftschadstoffe, wie NOx, CO, unverbrannte Kohlenwasserstoffe und Feinstaub- oder Rußpartikel als auch im Hinblick auf klimaschädliche Stoffe, wie CO₂, oder Geräusche die emissionsärmere Antriebseinheit.

Als deutlich sichtbar wird im Rahmen dieser Patentanmeldung eine Anzeigeeinrichtung verstanden, die während der Fahrt für andere Verkehrsteilnehmer oder Überwachungsbehörden oder Überwachungskameras so gut sichtbar ist, dass der auf der Anzeigeeinrichtung angezeigte Betriebszustand schnell und leicht erfasst und ausgewertet werden kann. Dies schließt eine auf der Instrumententafel des Kraftfahrzeugs angeordnete Anzeigeeinrichtung aus, da diese während der Fahrt selbst durch ein Fenster des Kraftfahrzeugs hindurch nicht hinreichend deutlich sichtbar ist, um Rückschlüsse auf die Betriebsart des Hybridantriebs des Fahrzeugs zu ziehen. Dass die Betriebsart im Fahrbetrieb deutlich sichtbar sein muss, ist deshalb wichtig, weil sich die Betriebsart beim Anhalten des Fahrzeugs ändern kann.

Eine bevorzugte Ausgestaltung der Erfindung sieht vor, dass die Anzeigeeinrichtung an der Außenseite des Kraftfahrzeugs angeordnet ist, wo sie gewöhnlich am besten sichtbar ist. Die Anzeigeeinrichtung kann zu diesem Zweck zum Beispiel in ein Karosseriebauteil der Außenseite des Kraftfahrzeugs des Kraftfahrzeugs integriert werden, wie zum Beispiel in ein Spiegelgehäuse von Außenspiegeln, ein Dach, eine Motorhaube, eine Stoßstange oder Radabdeckungen des Kraftfahrzeugs.

Um auch bei schlechteren Sicht- oder Lichtverhältnissen eine gute Erkennbarkeit der Anzeigeeinrichtung zu gewährleisten, umfasst diese vorzugsweise mindestens eine Beleuchtungseinrichtung, wie eine Leuchte oder Leuchtdioden.

Die Anzeigeeinrichtung kann entweder in beiden Betriebsarten eingeschaltet sein und die jeweilige Betriebsart auf unterschiedliche Weise anzeigen, zum Beispiel durch unterschiedliche Farben, jedoch kann auch vorgesehen werden, die Anzeigeeinrichtung nur in der zweiten, emissionsärmeren Betriebsart einzuschalten und sie ansonsten ausgeschaltet zu lassen.

Neben einer Anzeige durch unterschiedliche Farben oder Einschaltzustände von Beleuchtungseinrichtungen kann die Anzeigeeinrichtung die beiden Betriebsarten auch durch unterschiedliche Schriftzüge, Symbole oder Darstellungen anzeigen.

Während die Anzeigeeinrichtung vorteilhaft von einem Bordcomputer des Kraftfahrzeugs entsprechend der augenblicklichen Betriebsart des Hybridantriebs angesteuert wird, kann es auch von Vorzug sein, innerhalb des Kraftfahrzeugs eine Einrichtung zum Ein - und Ausschalten der Anzeigeeinrichtung vorzusehen, so dass der Fahrer diese bei Bedarf außer Betrieb nehmen kann.

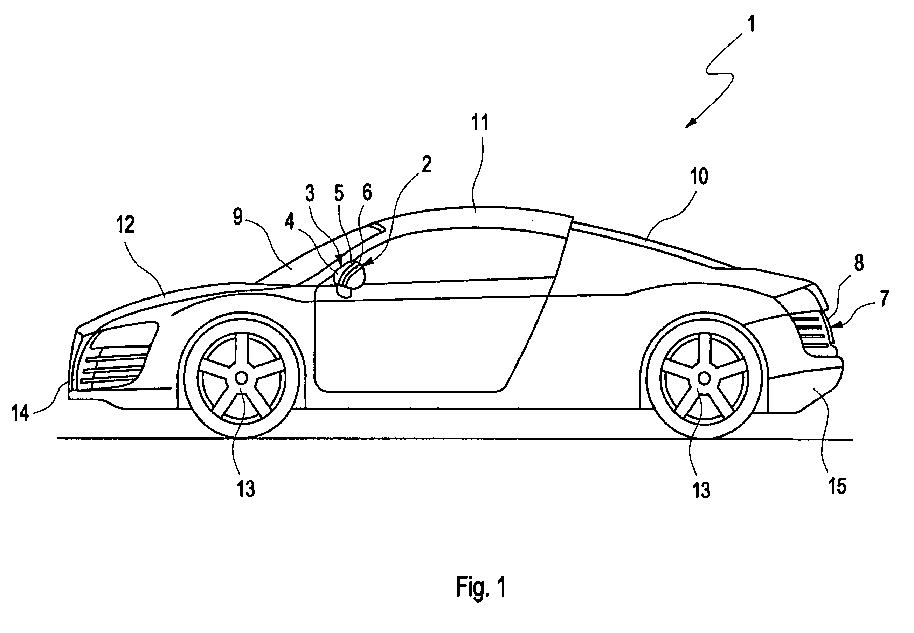

Im folgenden wird die Erfindung anhand eines in der Zeichnung dargestellten Ausführungsbeispiels näher erläutert. Die einzige Figur zeigt einen Personenkraftwagen 1 mit einem Hybridantrieb (nicht sichtbar) sowie mehrere alternative Möglichkeiten, um die augenblickliche Betriebsart des Hybridantriebs für Personen außerhalb des Personenkraftwagens gut sichtbar anzuzeigen.

Der in der Zeichnung dargestellte Personenkraftwagen 1 wird mit dem Hybridantrieb angetrieben, bei dem es sich zum Beispiel um einen an sich bekannten Hybridantrieb handeln kann, der einen Verbrennungsmotor und einen bzw. zwei Elektromotoren in einer parallelen bzw. leistungsverzweigenden Anordnung zum Verbrennungsmotor umfasst. Da der Elektromotor im rein elektrischen Fahrbetrieb keine Schadstoffe, wie NOx, CO, unverbrannte Kohlenwasserstoffe und Feinstaub oder klimaschädliche Stoffe, wie CO₂ emittiert und auch leiser als der Verbrennungsmotor ist, ist der Hybridantrieb in dieser Betriebsart emissionsärmer als in anderen Betriebsarten, in denen im Fahrbetrieb entweder nur der Verbrennungsmotor oder der Verbrennungsmotor in Kombination mit dem oder einem der Elektromotoren den Personenkraftwagen 1 antreibt.

Anders als bei einem Personenkraftwagen oder einem anderen Kraftfahrzeug mit einem einzigen Antriebsmotor, wie einem Verbrennungsmotor, das zum Beispiel an seiner Windschutzscheibe mit einer die Schadstoffgruppe oder Schadstoffklasse des Antriebsmotors anzeigenden Plakette versehen werden kann, ist bei dem dargestellten Personenkraftwagen 1 keine eindeutige Zuordnung zu einer bestimmten Schadstoffgruppe oder Schadstoffklasse möglich, da die Schadstoffemissionen des Personenkraftwagens 1 sehr große Unterschiede aufweisen können, je nachdem in welcher der zuvor genannten Betriebsarten der Hybridantrieb gerade arbeitet.

Dies bedeutet jedoch auch, dass es in Zonen, in denen der Betrieb von Kraftfahrzeugen Einschränkungen unterliegt, bei denen die Emissionen bestimmter Schadstoffe oder klimaschädlicher Stoffe vorgegebene Grenzwerte überschreiten, für Verkehrsüberwachungsbehörden und deren Vollzugorgane nicht möglich ist, festzustellen, ob die Emissionen des Personenkraftwagens 1 die vorgegebenen Grenzwerte überschreiten.

Um zu vermeiden, dass aus diesem Grund der Betrieb des Personenkraftwagens 1 von den Verkehrsüberwachungsbehörden grundsätzlich in allen Betriebsarten Einschränkungen unterworfen wird, ist der Personenkraftwagen 1 mit einer im Fahrbetrieb von außerhalb des Personenkraftwagens 1 deutlich sichtbaren Anzeigeeinrichtung versehen, mit der die augenblickliche Betriebsart des Hybridantriebs alternativ automatisch angezeigt wird oder auf Wunsch des Fahrers angezeigt werden kann.

Bei einer ersten Ausführungsform ist diese Anzeigeeinrichtung 2 in zwei Außenspiegel 3 (nur einer sichtbar) des Personenkraftwagens 1 integriert. Die Außenspiegel 3 weisen dort ein Spiegelgehäuse 4 auf, das zwei oder drei unterschiedlich gefärbte transparente Gehäuseteile 5, 6 und jeweils eine im Inneren jedes Gehäuseteils 5, 6 untergebrachte Leuchten (nicht dargestellt) umfasst. Beispielsweise kann vorgesehen sein, dass von zwei unterschiedlich gefärbten transparenten Gehäuseteilen 5, 6 der Außenspiegel 3 des Personenkraftwagens 1 eines rot und das andere grün eingefärbt ist, und dass die Leuchte im Innern des rot eingefärbten Gehäuseteils 5 automatisch eingeschaltet wird, sobald der Verbrennungsmotor des Hybridantrieb gestartet wird, während sich die Leuchte im Inneren des grün eingefärbten Gehäuseteils 6 nur dann im eingeschalteten Zustand befindet, wenn der Hybridantrieb im rein elektrischen Fahrbetrieb arbeitet und der Verbrennungsmotor abgestellt ist.

Bei einer zweiten Ausführungsform ist die Anzeigeeinrichtung 2 ebenfalls in die beiden Außenspiegel 3 des Personenkraftwagens 1 integriert, wobei dessen Gehäuse 4 oder ein Teil von dessen transparentem Gehäuse 4 jedoch nur in einer einzigen Farbe, zum Beispiele grün, eingefärbt ist, und einem im Inneren des Spiegelgehäuses 4 oder Spiegelgehäuseteils angeordnete Leuchte (nicht dargestellt) nur dann in Betrieb genommen wird, wenn der Hybridantrieb im rein elektrischen Fahrbetrieb arbeitet. In diesem Fall könnte im Inneren des Personenkraftwagens 1 ein zusätzlicher Schalter vorgesehen sein, mit dem der Fahrer die Stromzufuhr zu der Leuchte unterbrechen kann, wenn er sich zum Beispiel nicht in einer reglementierten Zone befindet und nicht wünscht, dass andere Verkehrsteilnehmer die augenblickliche Betriebsart des Hybridantriebs des Personenkraftwagens 1 sehen können.

Bei einer dritten Ausführungsform ist die Anzeigeeinrichtung als Display 7 ausgebildet und beispielsweise in der Nähe eines hinteren Nummernschilds 8 des Personenkraftwagens 1 angeordnet. Das Display, zum Beispiel ein LCD- oder LED-Display, wird von einem Bordcomputer des Personenkraftwagens 1 in Abhängigkeit von der Betriebsart des Hybridantriebs angesteuert und zeigt die augenblickliche Betriebsart des Hybridantriebs durch ein Symbol, einen Schriftzug oder eine andere Darstellung an, die von den Verkehrsüberwachungsbehörden bzw. deren Vollzugsorganen erkann und ausgewertet werden kann. Alternativ können auch Teile der Front- oder Heckscheibe 9, 10 als Display dienen, in welche die Anzeige der augenblicklichen Betriebsart eingeblendet wird.

Bei einer vierten Ausführungsform werden gut sichtbare Karosseriebauteile an der Außenseite des Personenkraftwagens 1, wie ein Dach 11, eine Motorhaube 12, Radabdeckungen 13 oder Teile eines vorderen oder hinteren Stoßfängers 14, 15 als Anzeigeeinrichtung verwendet, wobei die augenblickliche Betriebsart des Personenkraftwagens 1 durch eine farbliche Veränderung oder eine unterschiedliche Beleuchtung eines dieser Karosseriebauteile 11, 12, 13, 14, 15, angezeigt wird, wobei die Anzeige zum Beispiel im Falle transparenter oder transluzenter Karosseriebauteile durch OLEDs (Organic Light Emitting Diodes) oder andere Leuchtmittel hervorgerufen werden kann, die hinter den Karosseriebauteilen 11, 12, 13, 14, 15 angeordnet oder in diese integriert sein können.

### BEZUGSZEICHENLISTE

- 1: Personenkraftwagen
- 2: Anzeigeeinrichtung
- 3: Außenspiegel
- 4: Spiegelgehäuse
- 5: Gehäuseteil
- 6: Gehäuseteil
- 7: Display
- 8: hinteres Nummernschild
- 9: Frontscheibe
- 10: Heckscheibe
- 11: Dach
- 12: Motorhaube
- 13: Radabdeckungen
- 14: Stoßfänger
- 15: Stoßfänger

## Patentansprüche

1. Kraftfahrzeug mit einem Hybridantrieb, der eine erste Antriebseinheit und eine zweite emissionsärmere Antriebseinheit aufweist, wobei das Kraftfahrzeug im Fahrbetrieb in verschiedenen Betriebsarten des Hybridantriebs mindestens entweder von der ersten Antriebseinheit oder von der zweiten, emissionsärmeren Antriebseinheit angetrieben werden kann, sowie mit einer Anzeigeeinrichtung zum Anzeigen der augenblicklichen Betriebsart des Hybridantriebs, **dadurch gekennzeichnet, dass** die Anzeigeeinrichtung (2, 5, 6; 7; 9; 10; 11; 12; 13; 14; 15) im Fahrbetrieb von außerhalb des Kraftfahrzeugs (1) deutlich sichtbar ist und nur in der zweiten, emissionsärmeren Betriebsart eingeschaltet ist.

2. Kraftfahrzeug nach Anspruch 1, **dadurch gekennzeichnet, dass** die Anzeigeeinrichtung (2, 5, 6; 7; 9; 10; 11; 12; 13; 14; 15) an der Außenseite des Kraftfahrzeugs (1) angeordnet ist.

3. Kraftfahrzeug nach Anspruch 1 oder 2, **dadurch gekennzeichnet, dass** die Anzeigeeinrichtung (2, 5, 6; 9; 10; 11; 12; 13; 14; 15) in ein Karasseriebauteil (4; 11; 12; 13; 14; 15) des Kraftfahrzeugs (1) integriert ist.

4. Kraftfahrzeug nach Anspruch 3, **dadurch gekennzeichnet, dass** das Karosseriebauteil (4; 11; 12; 13; 14; 15) ein Spiegelgehäuse (4) eines Außenspiegels (3), ein Dach (11), eine Motorhaube (12), ein Stoßfänger (14, 15) oder mindestens eine Radabdeckung (13) des Kraftfahrzeugs (1) ist.

5. Kraftfahrzeug nach einem der vorangehenden Ansprüche, **dadurch gekennzeichnet, dass** die Anzeigeeinrichtung (2, 5, 6; 7; 9; 10; 11; 12; 13; 14; 15) mindestens eine Beleuchtungseinrichtung, wie eine Leuchte oder Leuchtdioden, umfasst

6. Kraftfahrzeug nach einem der vorangehenden Ansprüche, **gekennzeichnet durch** innerhalb des Kraftfahrzeugs (1) angeordnete Einrichtungen zum Ein- und Ausschalten der Anzeigeeinrichtung (2; 7; 9; 10; 11; 12; 13;14; 15).

7. Verfahren zum Betreiben eines Kraftfahrzeugs mit einem Hybridantrieb, der eine erste Antriebseinheit und eine zweite emissionsärmere Antriebseinheit aufweist wobei das Kraftfahrzeug im Fahrbetrieb in verschiedenen Betriebsarten des Hybridantriebs mindestens entweder von der ersten Antriebseinheit oder von der zweiten, emissionsärmeren Antriebseinheit angetrieben wird, **dadurch gekennzeichnet, dass** die augenblickliche Betriebsart des Hybridantriebs im Fahrbetrieb außerhalb des Kraftfahrzeugs (1) deutlich sichtbar angezeigt wird, wobei die zweite schadstoffärmere Betriebsart durch Einschalten einer Anzeigeeinrichtung (2, 5, 6; 7; 9; 10; 11; 12; 13; 14; 15) angezeigt wird, und wobei die Anzeigeeinrichtung (2, 5, 6; 7; 9; 10; 11; 12; 13; 14; 15) in der ersten Betriebsart ausgeschaltet wird.

8. Verfahren nach Anspruch 7, **dadurch gekennzeichnet, dass** die augenblickliche Betriebsart des Hybridantriebs von einer an der Außenseite des Kraftfahrzeugs (1) angeordneten Anzeigeeinrichtung (2, 5, 6; 7; 9; 10; 11; 12; 13; 14; 15) angezeigt wird.

## Claims

1. Motor vehicle comprising a hybrid drive, having a first drive unit and a second, low-emission drive unit, wherein the motor vehicle can be operated in travel mode in different modes of operation of the hybrid drive, at least either by the first drive unit or by the second, low-emission drive unit, and comprising a display device for displaying the current mode of operation of the hybrid drive, **characterised in that** the display device (2, 5, 6; 7; 9; 10; 11; 12; 13; 14; 15) is clearly visible from outside of the motor vehicle (1) in the travel mode, and is switched on only in the second, low-emission mode of operation.

2. Motor vehicle according to claim 1, **characterised in that** the display device (2, 5, 6; 7; 9; 10; 11; 12; 13; 14; 15) is arranged on the outside of the motor vehicle (1).

3. Motor vehicle according to either claim 1 or claim 2, **characterised in that** the display device (2, 5, 6; 9; 10; 11; 12; 13; 14; 15) is integrated into a body component (4; 11; 12; 13; 14; 15) of the motor vehicle (1).

4. Motor vehicle according to claim 3, **characterised in that** the body component (4; 11; 12; 13; 14; 15) is a mirror housing (4) of an external mirror (3), a roof (11), an engine cover (12), a bumper (14, 15) or at least one wheel cover (13) of the motor vehicle (1).

5. Motor vehicle according to any of the preceding claims, **characterised in that** the display device (2, 5, 6; 7; 9; 10; 11; 12; 13; 14; 15) includes at least one illumination device, such as a light or light-emitting diodes.

6. Motor vehicle according to any of the preceding claims, **characterised by** devices arranged within the motor vehicle (1) for switching the display device (2; 7; 9; 10; 11; 12; 13; 14; 15) on and off.

7. Method for operating a motor vehicle comprising a hybrid drive, having a first drive unit and a second, low-emission drive unit, wherein the motor vehicle is operated in travel mode in different modes of operation of the hybrid drive, at least either by the first drive unit or the second, low-emission drive unit, **characterised in that** the current mode of operation of the hybrid drive is displayed so as to be clearly visible from outside of the motor vehicle (1) in the travel mode, wherein the second, low-emission mode of operation is displayed by switching on a display device (2, 5, 6; 7; 9; 10; 11; 12; 13; 14; 15) and wherein the display device (2, 5, 6; 7; 9; 10; 11; 12; 13; 14; 15) is switched off in the first mode of operation.

8. Method according to claim 7, **characterised in that** the current mode of operation of the hybrid drive is displayed by a display device (2, 5, 6; 7; 9; 10; 11; 12; 13; 14; 15) which is arranged on the outside of the motor vehicle (1).

## Revendications

1. Véhicule à moteur pourvu d'un entraînement hybride, qui présente une première unité d'entraînement et une seconde unité d'entraînement plus pauvre en émissions, dans lequel le véhicule à moteur peut être entraîné en déplacement dans divers types d'exploitation de l'entraînement hybride soit par la première unité d'entraînement, soit par la seconde unité d'entraînement plus pauvre en émissions, ainsi que d'un dispositif d'affichage pour afficher le type d'exploitation instantané de l'entraînement hybride, **caractérisé en ce que** le dispositif d'affichage (2, 5, 6 ; 7 ; 9 ; 10 ; 11 ; 12 ; 13 ; 14 ; 15) est nettement visible en cours de déplacement de l'extérieur du véhicule (1) et ne se connecte que dans le second mode de fonctionnement plus pauvre en émissions.

2. Véhicule à moteur selon la revendication 1, **caractérisé en ce que** le dispositif d'affichage (2, 5, 6 ; 7 ; 9 ; 10 ; 11 ; 12 ; 13 ; 14 ; 15) est agencé sur la partie externe du véhicule à moteur (1).

3. Véhicule à moteur selon la revendication 1 ou la revendication 2, **caractérisé en ce que** le dispositif d'affichage (2, 5, 6 ; 9 ; 10 ; 11 ; 12 ; 13 ; 14 ; 15) est intégré à une pièce (4 ; 11 ; 12 ; 13 ; 14 ; 15) de la carrosserie du véhicule à moteur (1).

4. Véhicule à moteur selon la revendication 3, **caractérisé en ce que** la pièce (4 ; 11 ; 12 ; 13 ; 14 ; 15) de la carrosserie est un boîtier (4) d'un miroir externe (3), un toit (11), un capot de moteur (12), un pare-chocs (14, 15) ou au moins une aile (13) du véhicule à moteur (1).

5. Véhicule à moteur selon l'une quelconque des revendications précédentes, **caractérisé en ce que** le dispositif d'affichage (2, 5, 6 ; 7 ; 9 ; 10 ; 11 ; 12 ; 13 ; 14 ; 15) comprend au moins un dispositif d'éclairage, notamment une lampe ou des diodes électroluminescentes.

6. Véhicule à moteur selon l'une quelconque des revendications précédentes, **caractérisé par** des dispositifs agencés à l'intérieur du véhicule à moteur (1) pour connecter et déconnecter le dispositif d'affichage (2, 5, 6 ; 7 ; 9 ; 10 ; 11 ; 12 ; 13 ; 14 ; 15).

7. Procédé d'exploitation d'un véhicule à moteur avec un entraînement hydride, qui présente une première unité d'entraînement et une seconde unité d'entraînement plus pauvre en émissions, dans lequel le véhicule à moteur est entraîné en cours d'exploitation dans divers types de fonctionnement de l'entraînement hybride au moins soit par la première unité d'entraînement, soit par la seconde unité d'entraînement plus pauvre en émissions, **caractérisé en ce que** le mode de fonctionnement instantané de l'entraînement hybride en cours d'exploitation est affiché de manière nettement visible à l'extérieur du véhicule à moteur (1), dans lequel le second mode de fonctionnement plus pauvre en pollution est affiché par connexion d'un dispositif d'affichage (2, 5, 6 ; 7 ; 9 ; 10 ; 11 ; 12 ; 13 ; 14 ; 15) et dans lequel le dispositif d'affichage (2, 5, 6 ; 7 ; 9 ; 10 ; 11 ; 12 ; 13 ; 14 ; 15) est déclenché dans le premier mode de fonctionnement.

8. Procédé selon la revendication 7, **caractérisé en ce que** le mode de fonctionnement instantané de l'entraînement hybride est affiché par un dispositif d'affichage (2, 5, 6 ; 7 ; 9 ; 10 ; 11 ; 12 ; 13 ; 14 ; 15) aménagé sur la partie externe du véhicule à moteur (1).
